# EUROPÄISCHE PATENTANMELDUNG

(11) **EP 2 556 905 A2**
(43) Veröffentlichungstag der Anmeldung: **13.02.2013**
(21) Anmeldenummer: 12176135.7
(22) Anmeldetag: 12.07.2012
(51) Int. Cl.: B21D 53/16, B21D 53/84, B21D 7/08, F16D 13/64

(54) **Verfahren und Vorrichtung zur Herstellung von ringförmigen Kupplungslamellen mit Verzahnung**

(30) Priorität: 12.08.2011 DE 102011080927
(71) Anmelder: Otto Bihler Handels-Beteiligungs-GmbH, 87642 Halblech (DE); Egon Großhaus GmbH & Co. KG, 57368 Lennestadt (DE)
(72) Erfinder: Bihler, Mathias, 87642 Halblech (DE); Großhaus, Patrick, 57439 Attendorn (DE)
(74) Vertreter: Tiesmeyer, Johannes

(57) **Zusammenfassung**

Die vorliegende Erfindung betrifft ein Verfahren zur Herstellung von ringförmigen Kupplungslamellen (2a; 2b) mit Verzahnung, gekennzeichnet durch folgende Schritte:
a) Bereitstellung eines Bandstranges (1);
b) Umformen eines Längenabschnittes des Bandstranges (1) zu einer Ringwindung (9) durch einen Biegevorgang in einer Umformmaschine (3);
c) Trennen der Ringwindung (9) vom restlichen Bandstrang unter Bildung einer Trennstelle (13);
d) Verbinden der Enden der Ringwindung (9) an der Trennstelle (13) unter Bildung eines geschlossenen Ringes (15) und
e) Konturformen einer Verzahnung (18) am Innenumfang (19) oder am Außenumfang (29) des Ringes (15).

## Beschreibung

Die Erfindung betrifft ein Verfahren zur Herstellung von ringförmigen Kupplungslamellen mit Verzahnung und eine Vorrichtung zur Durchführung des Verfahrens.

Derartige Kupplungslamellen werden in Reibungskupplungen eingesetzt und besitzen Mitnahmezähne, die bei Außenlamellen am äußeren Umfang - und bei Innenlamellen am Innenumfang des Lamellenrings angeordnet sind und in entsprechende Nuten des zu kuppelnden Teiles eingreifen. Sie sind üblicherweise aus einem Stahl gefertigt.

Insbesondere im Falle von Hochleistungslamellenkupplungen ist es wichtig, dass die Kupplungslamellen sehr präzise gefertigt sind und an den Flächen, an denen sie mit komplementären Gegenflächen der zu kuppelnden Teile in Eingriff stehen, eine gute Oberflächenqualität und somit einen großen Traganteil haben.

Bisher war es übliche Vorgehensweise, Kupplungslamellen der hier betrachteten Art aus Stahlblechbändern mittels Feinstanzpressen auszustanzen und die ausgestanzten Werkstücke ggf. einer weiteren Oberflächenbehandlung zu unterziehen. Bei diesem konventionellen Verfahren fällt viel Verschnitt, d.h. Abfall an. Außerdem sind sehr hohe Stanzkräfte erforderlich, so dass große Anforderungen an die verwendeten Stanzmaschinen gestellt werden müssen.

Der vorliegenden Erfindung liegt die Aufgabe zugrunde, ein Verfahren der Eingangs genannten Art vorzustellen, welches bei sehr guter Materialausnutzung des Ausgangsmaterials einen großen Durchsatz bei der Kupplungslamellenherstellung ermöglicht.

Zur Lösung dieser Aufgabe wird ein Verfahren gemäß Anspruch 1 vorgeschlagen, welches die folgenden Schritte umfasst:
a) Bereitstellen eines Bandstranges aus einem geeigneten Material, insbesondere Stahl;
b) Umformen eines Längenabschnittes des Bandstranges zu einer Ringwindung durch einen Biegevorgang in einer Umformmaschine;
c) Trennen der Ringwindung vom restlichen Bandstrang unter Bildung einer Trennstelle;
d) Verbinden der Enden der Ringwindung an der Trennstelle unter Bildung eines geschlossenen Ringes und
e) Konturformen einer Verzahnung am Innenumfang oder am Außenumfang des Ringes.

Bei dem Bandstrang handelt es sich vorzugsweise um ein Flachband, das bei dem Umformvorgang gemäß Schritt b) die Ringkrümmung an den Flachbandschmalseiten erfährt, so dass die Flachbandbreitseiten die Stirnflächen des geformten Kreisringes bilden.

Die gewünschte Ringstruktur kann somit nahezu ohne Verschnitt hergestellt werden. Verschnitt fällt lediglich bei der Konturformung der umlaufenden Verzahnung an.

Das Verfahren ermöglicht eine sehr effiziente Produktion von hochwertigen Kupplungslamellen. Bereits im Versuchsstadium wurde ein Durchsatz von etwa 35 Kupplungslamellen pro Minute erreicht, der noch steigerbar ist. Das erfindungsgemäße Verfahren ist flexibel, da es durch etwaige Zwischenschritte erweiterbar ist. Die einzelnen Verfahrensschritte lassen sich mit einem flexiblen Grundwerkzeugsystem an Standardmaschinen durchführen. Daraus resultieren geringe typenbezogene Werkzeugkosten.

Der Schritt a) des Bereitstellens eines Bandstranges umfasst vorzugsweise das Einziehen des Bandstranges in die Umformmaschine, so dass der umzuformende Längenabschnitt des Bandstranges ein beim Einziehen vorlaufender Endabschnitt des Bandstranges ist. In diesem Fall reicht ein Trennschnitt aus, um die Ringwindung vom restlichen Bandstrang abzutrennen.

Der Biegevorgang gemäß Schritt b) ist vorzugsweise ein Rundbiegevorgang mittels Biegerollen, z.B. ein 3-Rollen-Biegevorgang.

Das Trennen der Ringwindung gemäß Schritt c) kann z.B. durch Stanzen, Scheren oder Laserschneiden erfolgen.

Das Verbinden der Enden der Ringwindung gemäß Schritt d) erfolgt vorzugsweise durch einen Schweißvorgang, etwa durch Widerstandsschweißen oder Laserschweißen. Die Schweißstelle sollte noch einem Schritt des Glättens unterzogen werden, etwa durch spanende Bearbeitung oder/und durch Prägung.

Gemäß einer Ausführungsform der Erfindung hat der in Schritt a) bereitgestellte Bandstrang vor dem Umformen im Schritt b) einen rechteckigen Querschnitt mit Breitseiten und Schmalseiten, wobei die Umformung des betreffenden Längenabschnittes des Bandstranges zu einem Ring so erfolgt, dass die Schmalseiten die Umfangsflächen des Ringes bilden, wohingegen die Breitseiten die Stirnflächen des Ringes bilden.

Aufgrund unterschiedlicher Materialverdrängungen am Außenumfang und am Innenumfang der bei dem Biegevorgang entstehenden Ringschleife kann es vorkommen, dass sich der Bandquerschnitt im Ring mit einer Keilbildungstendenz verändert und in etwa gleichschenklig-trapezförmig wird. In einem solchen Fall sollte sich noch ein Schritt des Parallelformens der einander entgegengesetzten Stirnseiten des Ringes durch einen Richtvorgang, insbesondere Parallelwalzvorgang, oder Schleifvorgang anschließen, z.B. unmittelbar nach dem Schritt d) des Verbindens der Enden der Ringwindung oder ggf. nach einem Schritt der Glättung der Verbindungsstelle.

Der vorstehend angesprochenen Keilbildungstendenz des Bandstranges bei dem Biegevorgang gemäß b) kann gemäß einer Ausführungsform der Erfindung entgegengewirkt werden, nämlich indem gemäß Schritt a) ein Bandstrang bereitgestellt wird, der vor dem Umformen einen bereits gleichschenklig-trapezförmigen Querschnitt mit schmalen Parallelseiten und im Vergleich damit breiteren Schenkelseiten aufweist, wobei die Umformung des betreffenden Längenabschnittes des Bandstranges zu einem Ring so erfolgt, dass die Parallelseiten die Umfangsflächen des Ringes bilden. Die breitere Parallelseite des Bandstranges bildet in dem Ring den Außenumfang. Der gleichschenklig-trapezförmige Querschnitt des bereitgestellten Bandstrangs ist so bemessen, dass der Keilbildungseffekt des Biegevorgangs weitestgehend kompensiert wird, so dass der geschlossene Ring sogleich parallel zueinander ausgerichtete Stirnseiten hat.

Gemäß einer weiteren Variante der Erfindung geht dem Umformschritt b) ein Vorbiegeschritt voraus, bei dem der Längenabschnitt des Bandstranges so vorgebogen wird, dass er zunächst eine Krümmung erfährt, die der darauffolgend in Schritt b) erzeugten Krümmung entgegengesetzt ist. Der Längenabschnitt wird somit nacheinander in entgegengesetzten Richtungen rundgebogen. Der dazu in Schritt a) bereitgestellte Bandstrang hat vorzugsweise Rechteckquerschnitt.

Die vorstehend erläuterte Vorgehensweise dient dazu, einer Keilbildungstendenz des Bandstranges im Umformschritt b) durch eine dazu im Wesentlichen komplementäre Keilbildungstendenz im Vorbiegeschritt kompensierend entgegenzuwirken. Der Vorbiegeschritt erfolgt vorzugsweise durch einen Rundbiegevorgang, wie auch der Umformschritt b).

Der Schritt e) des Konturformens einer Verzahnung am Innenumfang oder am Außenumfang des Ringes kann z.B. durch komplettes Stanzen der Verzahnung in einem Stanzvorgang oder durch segmentweises serielles Stanzen der Verzahnung oder durch Laserschneiden der Verzahnung erfolgen.

Sofern an die Oberflächenqualität der entstehenden Kupplungslamelle sehr hohe Anforderungen gestellt sind, wird es empfohlen, dass dem Schritt e) des Konturformens der Verzahnung noch ein Nachbearbeitungsschritt folgt, der z.B. das Nachscheren oder Räumen oder Laserschneiden im Bereich der Verzahnung umfasst.

Das Verfahren kann in Verallgemeinerung der Erfindung zur Herstellung von (Metall) Flachringen mit Ausnehmungen (Konturen) am Innenumfang oder/und am Außenumfang in völlig analoger Weise durchgeführt werden.

Gegenstand der Erfindung ist ferner eine Vorrichtung gemäß Anspruch 12. Eine bevorzugte Weiterbildung dazu ist in Anspruch 13 angegeben.

Die Erfindung wird nachstehend unter Bezugnahme auf die Zeichnungen anhand eines Ausführungsbeispiels erläutert.
- Figur 1: zeigt in einer perspektivischen Darstellung Kupplungslamellen in verschiedenen Fertigungsstufen;
- Figur 2: zeigt in einer schematischen Darstellung aufeinanderfolgende Schritte (Stufe I. - Stufe IV.) des Verfahrens nach der Erfindung bei der Herstellung einer innenverzahnten Kupplungslamelle;
- Figur 3: zeigt zwei unterschiedliche Querschnitte verschiedener Bandstränge vor dem Einzug in die Umformmaschine;
- Figur 4: zeigt eine Variante der Stufe I. aus Figur 2.

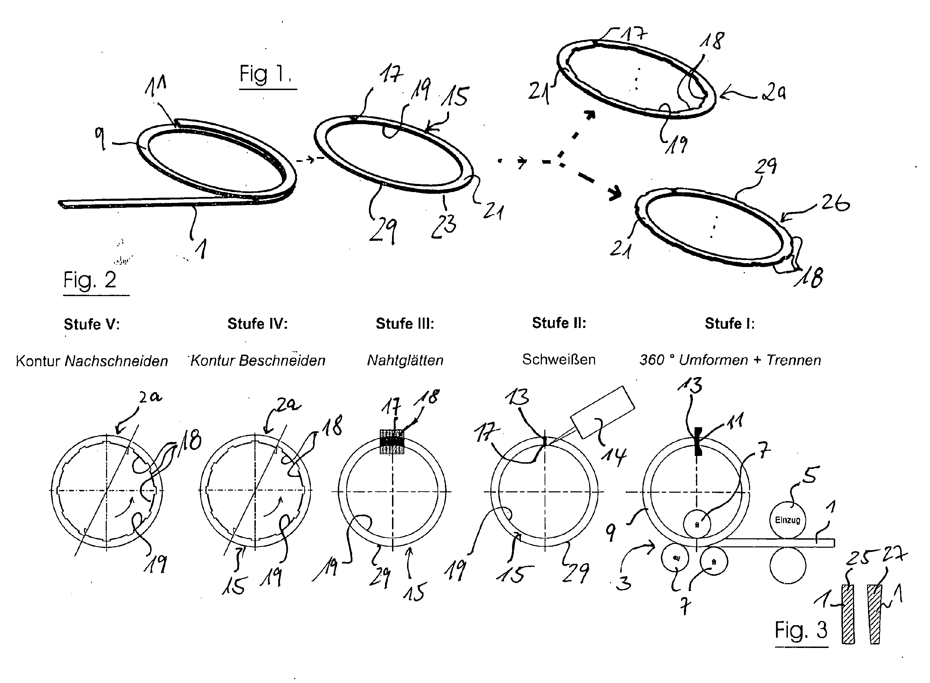

Gemäß Stufe I. in Figur 2 erfolgt das Einziehen eines Flachbandstranges 1 in eine Rollenbiegemaschine 3 mittels eines Einzugs 5. Das Einziehen des Flachbandstrangs kann z.B. von einem Wickel (Coil) erfolgen. Der dabei im Querschnitt betrachtet hochkant eingezogene Flachbandstrang 1 wird durch Biegerollen 7 der Rollenbiegemaschine 3 an seinen Schmalseiten gekrümmt, so dass eine Kreisspiralwindung 9 entsteht, die insbesondere in dem linken Teilbild in Figur 1 gut erkennbar ist. Durch einen Trennschnitt an der mit 11 gekennzeichneten Stelle in den Figuren 1 und 2 wird eine in etwa 360°-Ringwindung vom restlichen Bandstrang unter Bildung einer Trennstelle 13 separiert.

In dem gezeigten Ausführungsbeispiel erfolgt dann der Transfer der separierten Kreisringwindung zu einer Schweißstation mit einem Schweißgerät 14, in der gemäß Stufe II. in Figur 2 die Enden der Ringwindung an der Trennstelle 13 miteinander verschweißt werden, etwa durch Widerstandsschweißen oder Laserschweißen, ggf. unter Zugabe eines Schweißzusatzwerksoffes. Danach liegt bereits ein geschlossener Ring 15 als Rohling für die herzustellende Kupplungslamelle vor (vgl. auch mittleres Teilbild in Figur 1).

In dem Ausführungsbeispiel wird der Ring 15 in Stufe III. einem Vorgang des Glättens der Verbindungsstelle 17, also der Schweißnaht 17 mit einem Glättungswerkzeug 18 unterzogen. Dieser Glättungsvorgang kann je nach Ausbildung der Schweißnaht z.B. eine spanende Bearbeitung oder Prägung umfassen.

Gemäß Figur 2 erfolgt in einer weiteren Bearbeitungsstation das Konturformen einer Verzahnung 18 am Innenumfang 19 des Ringes 15. Das Konturformen kann mittels verschiedener Methoden erfolgen, etwa durch ein komplettes Ausstanzen oder durch segmentweises serielles Ausstanzen der Verzahnung 18. Gemäß Stufe IV. in Figur 2 erfolgt im Ausführungsbeispiel ein serielles Ausstanzen von Zähnen der Verzahnung 18, wobei der Ring 15 nach jedem Stanzhub um einen Drehwinkelschritt weiter verdreht wird, bis die Verzahnung 18 umlaufend am Innenumfang 19 fertiggestellt ist. Das serielle Stanzen erfordert keine kritisch großen Stanzkräfte und ist mit entsprechend kleiner dimensionierten Stanzen durchführbar.

Das Konturformen der Verzahnung 18 kann alternativ auch z.B. durch Laserschneiden erfolgen.

Für den Fall, dass besonders hohe Anforderungen an die Oberflächengüte der so hergestellten Kupplungslamelle 2a) gestellt sind, wird vorzugsweise noch ein Schritt des Nachschneidens der Verzahnung 18 vorgenommen, wie dies in Stufe V. in Figur 2 angedeutet ist. Dieser Nachschneidvorgang kann z.B. ein Schervorgang, ein Räumvorgang oder ein Laserschneidvorgang sein.

Falls die oben bereits angesprochene Keilbildungstendenz des Bandstranges 1 beim Rollenbiegen dazu geführt haben sollte, dass die Stirnseiten 21, 23 des Ringes 15 nicht in der erforderlichen Weise parallel zueinander verlaufen, so wird empfohlen dass das Verfahren noch durch einen Schritt des Parallelformens der einander entgegengesetzten Stirnseiten 21, 23 des Ringes 15 erweitert wird, wobei dieses Parallelformen vorzugsweise durch einen Parallelwalzvorgang oder ggf. einen Schleifvorgang erfolgt. Im Falle eines Parallelwalzens kommen vorzugsweise konisch geformte Walzen zum Einsatz, um aus den Keilschenkelflächen der Stirnseiten 21, 23 Flächen zu bilden, die in zueinander parallelen Ebenen liegen. Bei dem Parallelformen mit konischen Walzen sind diese vorzugsweise auf einem der Form des Ringes 15 angepassten Kreissegment angeordnet, wobei sich der Ring 15 zwischen solchen konischen Walzen drehend hindurch bewegt.

Figur 3 zeigt zwei Beispiele für unterschiedliche Querschnitte des Bandstranges 1 vor dem Umformen. Der Querschnitt 25 ist rechteckig, wie er bei einem üblichen Flachband 1 der hier betrachteten Art normalerweise vorzufinden ist. Der Querschnitt 27 hat dagegen gleichschenklig-trapezförmige Form, mittels welcher eine Keilbildungstendenz des Bandstranges kompensiert werden soll.

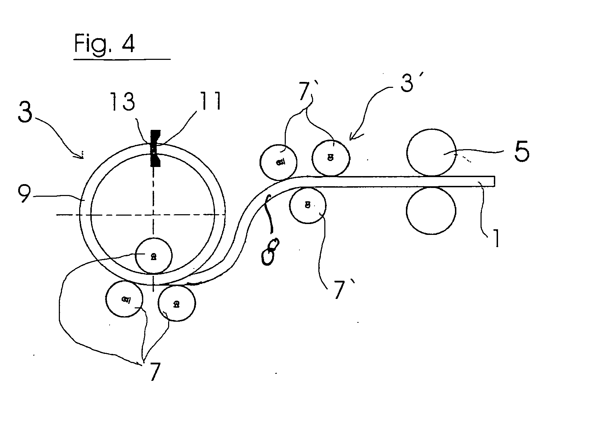

Figur 4 zeigt eine Modifikation der Stufe I. in Figur 2, wobei diese Modifikation darin besteht, dass zwischen dem Einzug 5 und der Rollenbiegemaschine 3 eine Vorbiegestation 3' zwischengeschaltet ist, die den eingezogenen Bandstrang 1 mit einer Krümmung (bei 8) versieht, die der Krümmung entgegengesetzt ist, die der Bandstrang anschließend in der Rollenblegemaschine 3 erfährt. In anderen Worten, der jeweilige Längenabschnitt des Bandstrangs 1 wird nacheinander in entgegengesetzten Richtungen rundgebogen, so dass er schließlich die Ringwindungen 9 bildet. Auch die Vorbiegestation 3' ist vorzugsweise eine Rollenbiegestation mit Biegerollen 7'. Der eingezogene Bandstrang 1 hat vorzugsweise Rechteckquerschnitt. Das wechselseitige Biegen in den Stationen 3' und 3 der jeweiligen Bandstrangabschnitte dient dazu, einer Keilbildungstendenz des Bandstranges in der Rollenbiegemaschine 3 durch eine dazu im Wesentlichen komplementäre Keilbildungstendenz in der Vorbiegestation 3' kompensierend entgegenzuwirken, so dass die Ringwindung 9 wiederum Rechteckquerschnitt aufweist.

Figur 4 zeigt somit eine Maßnahme zur effizienten Fertigung von Flachringen mit planparallelebenen Stirnflächen.

In Figur 2 ist die Herstellung einer innenverzahnten Kupplungslamelle 2a (Innenlamelle 2a) illustriert. In völlig analoger Weise kann auch eine außenverzahnte Kupplungslamelle, wie sie in Figur 1 dargestellt und mit 2b bezeichnet ist, hergestellt werden, wobei das Konturformen der Verzahnung 18 am Außenumfang 29 des Ringes 15 erfolgt.

Figur 1 zeigt nur die Ergebnisse der Stufen I., III. und IV. der Figur 2 und soll demonstrieren, dass aus dem Ring 15 wahlweise eine innenverzahnte Kupplungslamelle 2a oder eine außenverzahnte Kupplungslamelle 2b durch entsprechende Konturformung der Verzahnung 18 am Innenumfang oder am Außenumfang des Rings 15 hergestellt werden kann.

Eine erfindungsgemäße Vorrichtung zur Durchführung des Verfahrens umfasst in einer Anordnung der Aufeinanderfolge einen Flachbandstrangeinzug 5, eine Umformmaschine 3, vorzugsweise Rollenbiegestation, eine Trennvorrichtung, vorzugsweise Laserschneidvorrichtung, eine Schweißvorrichtung 14, vorzugsweise Laserschweißvorrichtung, die ggf. mit der Trennvorrichtung identisch sein kann, und eine Konturformungsvorrichtung, insbesondere eine Stanzvorrichtung, zum Konturformen der Verzahnung 18.

## Patentansprüche

1. Verfahren zur Herstellung von ringförmigen Kupplungslamellen (2a; 2b) mit Verzahnung,
**gekennzeichnet durch** folgende Schritte:
a) Bereitstellung eines Bandstranges (1);
b) Umformen eines Längenabschnittes des Bandstranges (1) zu einer Ringwindung (9) **durch** einen Biegevorgang in einer Umformmaschine (3);
c) Trennen der Ringwindung (9) vom restlichen Bandstrang unter Bildung einer Trennstelle (13);
d) Verbinden der Enden der Ringwindung (9) an der Trennstelle (13) unter Bildung eines geschlossenen Ringes (15) und
e) Konturformen einer Verzahnung (18) am Innenumfang (19) oder am Außenumfang (29) des Ringes (15).

2. Verfahren nach Anspruch 1, **dadurch gekennzeichnet, dass** der Schritt a) das Einziehen des Bandstranges (1) in die Umformmaschine umfasst und dass der umzuformende Längenabschnitt des Bandstrangs (1) ein beim Einziehen vorlaufender Endabschnitt des Bandstrangs ist.

3. Verfahren nach einem der vorher gehenden Ansprüche, **dadurch gekennzeichnet, dass** Schritt b) einen Rollbiegevorgang umfasst.

4. Verfahren nach einem der vorher gehenden Ansprüche, **dadurch gekennzeichnet, dass** der Schritt c) des Trennens der Ringwindung (9) wenigstens einen der nachstehenden Trennvorgänge umfasst:
- Stanzen;
- Scheren;
- Laserschneiden.

5. Verfahren nach einem der vorher gehenden Ansprüche, **dadurch gekennzeichnet, dass** bei dem Schritt d) die Enden der Ringwindung miteinander verschweißt werden.

6. Verfahren nach einem der vorher gehenden Ansprüche, **dadurch gekennzeichnet, dass** dem Schritt d) des Verbindens der Enden der Ringwindung ein Schritt des Glättens der Verbindungsstelle (17) durch spanende Bearbeitung oder/durch Prägung folgt.

7. Verfahren nach einem der vorher gehenden Ansprüche, **dadurch gekennzeichnet, dass** der gemäß Schritt a) bereitgestellte Bandstrang (1) vor dem Umformen rechteckigen Querschnitt (25) mit Breitseiten und Schmalseiten aufweist, wobei die Umformung des betreffenden Längenabschnittes des Bandstranges zu einem Ring so erfolgt, dass die Schmalseiten die Umfangsflächen des Ringes bilden, wohingegen die Breitseiten die Stirnflächen des Ringes bilden.

8. Verfahren nach einem der vorhergehenden Ansprüche, **dadurch gekennzeichnet, dass** dem Umformschritt b) ein Vorbiegeschritt unmittelbar vorausgeht, bei dem der Längenabschnitt des Bandstranges vorzugsweise durch Rollenbiegen so vorgebogen wird, dass er zunächst eine Krümmung erfährt, die der darauffolgend in Schritt b) erzeugten Krümmung entgegengesetzt ist.

9. Verfahren nach einem der Ansprüche 1-7, **dadurch gekennzeichnet, dass** der gemäß Schritt a) bereitgestellte Bandstrang (1) vor dem Umformen gleichschenklig-trapezförmigen Querschnitt (27) mit schmalen Parallelseiten und im Vergleich damit breiteren Schenkelseiten aufweist, wobei die Umformung des betreffenden Längenabschnittes des Bandstranges zu einem Ring so erfolgt, dass die Parallelseiten die Umfangsflächen des Ringes (15) bilden.

10. Verfahren nach einem der vorher gehenden Ansprüche, **dadurch gekennzeichnet, dass** dem Schritt d) des Verbindens der Enden der Ringwindung (9) ein Schritt des Parallelformens der einander entgegengesetzten Stirnseiten (19, 29) des Ringes durch einen Richtvorgang, insbesondere Parallelwalzvorgang, oder Schleifvorgang folgt.

11. Verfahren nach einem der vorher gehenden Ansprüche, **dadurch gekennzeichnet, dass** der Schritt des e) Konturformens einer Verzahnung (18) am Innenumfang (19) oder am Außenumfang (29) des Ringes (15) wenigstens einen der nachstehenden Schneidvorgänge umfasst:
- komplettes Stanzen der Verzahnung;
- segmentweises serielles Stanzen der Verzahnung;
- Laserschneiden der Verzahnung.

12. Verfahren nach einem der vorher gehenden Ansprüche, **dadurch gekennzeichnet, dass** dem Schritt e) des Konturformens der Verzahnung (18) ein Nachbearbeitungsschritt folgt, der wenigsten einen der nachstehenden Nachbearbeitungsschritte umfasst:
- Nachscheren;
- spanende Nachbearbeitung, insbesondere Räumen;
- Laserschneiden.

13. Vorrichtung zur Durchführung des Verfahrens, umfassend in einer Anordnung der Aufeinanderfolge einen Flachbandeinzug (5), eine Rundbiegemaschine (3), vorzugsweise Rollenbiegestation, eine Trennvorrichtung, vorzugsweise Laserschneidvorrichtung, eine Schweißvorrichtung (14), vorzugsweise Laserschweißvorrichtung, die ggf. mit der Trennvorrichtung identisch sein kann, und eine Konturformungsvorrichtung, insbesondere eine Stanzvorrichtung, zum Konturformen der Verzahnung (18).

14. Vorrichtung nach Anspruch 13, wobei der Rundbiegemaschine (3) eine Vorbiegeeinheit (3') vorgeschaltet ist, die dazu eingerichtet ist, einen der Rundbiegemaschine (3) zugeführten Bandstrangabschnitt (1) vorweg mit einer Krümmung zu versehen, die der in der Rundbiegemaschine (3) erzeugten Krümmung dieses Bandstrangabschnittes (1) im Wesentlichen komplementär entgegengesetzt ist.
